# EUROPEAN PATENT APPLICATION

(11) **EP 2 712 757 A2**
(43) Date of publication of application: **02.04.2014**
(21) Application number: 13182120.9
(22) Date of filing: 29.08.2013
(51) Int. Cl.: B60L 1/00, B60L 3/12

(54) **In-vehicle device controller**

(30) Priority: 27.09.2012 JP 2012214784
(71) Applicant: Mitsubishi Jidosha Kogyo Kabushiki Kaisha, Tokyo 108-8410 (JP)
(72) Inventor: Yashiro, Hiroyuki, Tokyo 108-8410 (JP); Kawashima, Naoki, Tokyo 108-8410 (JP); Fukatsu, Hiroki, Tokyo 108-8410 (JP); Shiba, Masahide, Tokyo 108-8410 (JP); Maeda, Takuma, Tokyo 108-8410 (JP)
(74) Representative: Regimbeau

(57) **Abstract**

An in-vehicle device controller (22a, 22b, 23) controlling an in-vehicle device (22A, 22B, 12) for operating a high-voltage source (11A) installed in a vehicle includes stopping means (22a4, 22b4, 23D) stopping control or operation of the in-vehicle device (22A, 22B, 12) to stop the operation of the high-voltage source (11A) when an open/close sensor (18a, 18b) detects opening of an openable member of the vehicle.

## Description

### FIELD

The present invention relates to an in-vehicle device controller that controls an in-vehicle device for operating a high-voltage source installed in an automobile.

### BACKGROUND

Techniques for remotely controlling devices installed in automobiles (hereinafter, also referred to as "vehicles") have been developed and widely used. For example, techniques have been developed for starting an engine of a vehicle by remote control to preheat the engine and carrying out preliminary air-conditioning by remote control of an air-conditioner of a vehicle to heat or cool the interior of the vehicle after starting the engine. Such techniques are, for example, described in Japanese Laid-Open Patent Publication No. 11-230013(patent document 1).

Patent document 1 describes a technique involving a control circuit for control of an aftermarket electric device installed in a vehicle. This vehicle has an engine control circuit that is wirelessly controllable to start/stop the engine of the vehicle through operation of a portable controller (remote controller) provided with a start switch and a stop switch. The aftermarket electric device is turned on by an operation-start signal which is an operation signal from the start switch during operation of the engine and turned off by an operation-stop signal which is an operation signal from the stop switch during a halt of the engine.

### SUMMARY

### TECHNICAL PROBLEMS

In addition to the preliminary air-conditioning described above, the inventors have believed that electric vehicles and plug-in hybrid vehicles that are chargeable via household wall sockets can be more convenient with remote detection and control of the electrical charge of the vehicles in a chargeable state in which the charging systems of the vehicles are connected to electric sockets. Such remote control of various devices enhances the convenience of the vehicles in use.

Especially, for regular use of the automobile for commuting to work every day, for example, the convenience of the automobile could be greatly enhanced if preliminary air-conditioning and electrical charge were carried out automatically at timings set by a timer in advance.
Setting of the timer to carry out the charge of a battery (timer-controlled charge) and/or the air-conditioning (timer-controlled air-conditioning) of the interior of the automobile by remote control poses a potential risk of improper operations, such as those described below, which must be avoided.

Operation (energization) of a high-voltage source (main battery, a battery for running) is required when charging the high-voltage main battery, or carrying out charge of an auxiliary battery or air-conditioning by the main battery. Such operation of the high-voltage source, however, must be avoided during maintenance at, for example, a repair facility.
The timer-controlled charge and the timer-controlled air-conditioning are carried out at regular timings set by the timer upon fulfillment of predetermined operation conditions even during maintenance. This, however, must be prevented.

The timer-controlled charge and the timer-controlled air-conditioning can be established by means other than remote control. For example, the timer-controlled charge and the timer-controlled air-conditioning can be carried out through operation of an in-vehicle device.
Other than the operation by the timer, the high-voltage source may be operated by an improper operation of a remote controller at a remote point from the vehicle during maintenance at a repair facility.

The convenience of the remote controller may be enhanced by using a standardized communication scheme having a relatively long wireless communication distance or making a general-purpose remote controller applicable. This, however, may lead to an increase in negative effect of improper operation of the remote controller due to the relatively long operable distance.
The charge of the high-voltage main battery requires insertion of a charge gun into a charge plug. Thus, such charge can be controlled by an operator. In contrast, the operator cannot control the charge of the auxiliary battery and the preliminary air-conditioning using the main battery, which do not require insertion of a charge gun into a charge plug.

The risk of the operation of the high-voltage source can be prevented by unplugging a service plug of the high-voltage source or removing the auxiliary battery before operation. The operator, however, may sometimes forget to take such precautions. Furthermore, when charging the main battery, the operator may start operation without confirming the insertion of the charge gun into the charge plug.

### SOLUTION TO PROBLEMS

An object of the present invention, which has been conceived by solving the drawbacks described above, is to provide an in-vehicle device controller that stops operation of a specific in-vehicle device for operating a high-voltage source during maintenance of a vehicle.

An in-vehicle device controller according to the present invention controls at least one in-vehicle device for operating a high-voltage source installed in a vehicle and comprises stopping means (unit) stopping control or operation of the in-vehicle device to stop the operation of the high-voltage source upon detection of opening of an openable member of the vehicle by an open/close sensor.

The in-vehicle device controller according to the present invention stops the control or the operation of the in-vehicle device operating the high-voltage source to stop the operation of the high-voltage source upon detection of the opening of the openable member of the vehicle by the open/close sensor. Thus, the operation of the high-voltage source due to the operation of the in-vehicle device can be avoided during maintenance of the vehicle, which is performed with the openable member of the vehicle open.

Preferably the openable member is one of a plurality of openable members including a door, a hood, and a trunk lid of the vehicle, and the stopping unit may stop control or operation of the in-vehicle device to stop the operation of the high-voltage source upon detection of the opening of the doors, the hood, or the trunk lid by the open/close sensor.

Preferably the high-voltage source may be disposed below a floor of the vehicle, a maintenance hole for maintenance of the high-voltage source may be disposed in the floor of the vehicle above the high-voltage source, and the stopping unit may stop control or operation of in-vehicle device to stop the operation of the high-voltage source upon detection of the opening of a specific openable member of the plurality of the openable members by the open/close sensor, the specific openable member providing access to the maintenance hole.

The openable member opened during maintenance of the vehicle includes a door, a hood, and a trunk lid of the vehicle, and a specific door providing access to the maintenance hole. Thus, the risk of the operation of the high-voltage source due to the operation of the in-vehicle device can be avoided during maintenance of the vehicle. Although the door, the hood, and the trunk lid are also opened at times other than maintenance, it is effective in securing safety at times other than maintenance as well to stop the control or the operation of the in-vehicle device for operating the high-voltage source by the in-vehicle device controller to stop the operation of the high-voltage source during the opening of the door, the hood, and the trunk lid.

Preferably the in-vehicle device may comprise a main battery charger supplying a main battery with electric power, which is the high-voltage source, from an external power source, the in-vehicle device controller may comprise a main-battery charge controller controlling the charge of the main battery through operation of the main battery charger with the main battery being connected to the external power source, the main-battery charge controller may comprise main-battery-charge timer control means (unit) automatically charging the main battery with the external power source in accordance with a time schedule established in advance, and the stopping unit may disable control by the main-battery-charge timer control unit upon detection of the opening of the openable member by the open/close sensor and stop control or operation of the main-battery charge to stop the operation of the high-voltage source.

For example, in a case where the in-vehicle device comprises the main battery charger supplying the main battery, which is a high-voltage source, with electric power from an external power source, the in-vehicle device controller comprises the main-battery charge controller controlling the charge of the main battery through operation of the main battery charger, and the main battery is automatically charged with the external power source in accordance with the time schedule established in advance, there is a risk that the high-voltage source is operated in a state where the maintenance operator of the vehicle does not expect. This risk, however, can be avoided.

Preferably the in-vehicle device may comprise an air-conditioner installed in the vehicle, the in-vehicle device controller may comprise an air-conditioning controller controlling operation of the air-conditioner, the air-conditioning controller may comprise air-conditioning timer control means (unit) automatically operating the air-conditioner in accordance with a time schedule established in advance, and the stopping unit may disable control by the air-conditioning timer control unit upon detection of the opening of the openable member by the open/close sensor and stop control or operation of the air-conditioner to stop the operation of the high-voltage source.

Similarly, in a case where the in-vehicle device comprises the air-conditioner installed in the vehicle, the in-vehicle device controller comprises the air-conditioning controller controlling the operation of the air-conditioner, and the air-conditioner is automatically operated in accordance with the time schedule set in advance, there is a risk that the high-voltage source is operated in a state where the maintenance operator of the vehicle does not expect. This risk, however, can be avoided.

Preferably the in-vehicle device may comprise an auxiliary battery charger charging an auxiliary battery installed in the vehicle with the main battery, the in-vehicle device controller may comprise an auxiliary-battery charge controller controlling charge in which the auxiliary battery is supplied with electric power from the main battery by operation of the auxiliary battery charger, the auxiliary-battery charge controller may comprise auxiliary-battery-charge timer control means (unit) automatically performing the charge in accordance with a time schedule established in advance, and the stopping unit may disable control by the auxiliary-battery-charge timer control unit upon detection of the opening of the openable member by the open/close sensor and stop control or operation of the auxiliary battery charger to stop the operation of the high-voltage source.

In a case where the in-vehicle device comprises the auxiliary battery charger charging the auxiliary battery with the main battery, the in-vehicle device controller comprises the auxiliary-battery charge controller operating the auxiliary battery to charge the auxiliary battery from the main battery, and the auxiliary battery is automatically charged in accordance with the time schedule set in advance, there is a risk that the high-voltage source is operated in a state where the maintenance operator of the vehicle does not expect. This risk, however, can be avoided.

### DESCRIPTION OF EMBODIMENTS

Fig. 1 is a block diagram illustrating the main components of an in-vehicle device controller according to an embodiment of the present invention and a remote control system for in-vehicle devices including the in-vehicle device controller.
Fig. 2 is a configuration diagram illustrating a schema of an in-vehicle device controller according to an embodiment of the present invention and a remote control system for in-vehicle devices including the in-vehicle device controller.
Fig. 3 is a detailed configuration diagram of an in-vehicle device controller according to an embodiment of the present invention and a remote control system for in-vehicle devices including the in-vehicle device controller.
Fig. 4 illustrates a display menu (home menu) of a mobile communication device or a multifunctional portable terminal of a remote control system for in-vehicle devices according to an embodiment of the present invention.
Figs. 5A and 5B illustrate a display menu (timer-controlled charge setting menu) of a mobile communication device or a multifunctional portable terminal of a remote control system for in-vehicle devices according to an embodiment of the present invention; Fig. 5A illustrates a menu for setting the schedule of timer-controlled charge; and Fig. 5B illustrates a menu for setting the timer.
Figs. 6A and 6B illustrate a display menu (menu for setting timer-controlled air-conditioning) of a mobile communication device or a multifunctional portable terminal of a remote control system for in-vehicle devices according to an embodiment of the present invention; Fig. 6A illustrates a menu for setting the schedule of timer-controlled air-conditioning; and Fig. 6B illustrates a menu for setting the timer.
Fig. 7 illustrates a vehicle information menu of a mobile communication device or a multifunctional portable terminal of a remote control system for in-vehicle devices according to an embodiment of the present invention.
Fig. 8 illustrates a vehicle operation menu (panic alarm) of a mobile communication device or a multifunctional portable terminal of a remote control system for in-vehicle devices according to an embodiment of the present invention.
Fig. 9 illustrates a vehicle operation menu (parking position verification) of a mobile communication device or a multifunctional portable terminal of a remote control system for in-vehicle devices according to an embodiment of the present invention.
Fig. 10 illustrates a vehicle operation menu (door lock) of a mobile communication device or a multifunctional portable terminal of a remote control system for in-vehicle devices according to an embodiment of the present invention.
Fig. 11 illustrates a settings menu of a mobile communication device or a multifunctional portable terminal of a remote control system for in-vehicle devices according to an embodiment of the present invention.
Fig. 12 illustrates a settings menu of a mobile communication device or a multifunctional portable terminal of a remote control system for in-vehicle devices according to an embodiment of the present invention.

### DESCRIPTION OF EMBODIMENTS

Embodiments of the present invention will now be described with reference to the accompanying drawings.
The vehicle according to this embodiment is a plug-in hybrid electric vehicle (PHEV) equipped with a main battery (a battery for running) chargeable via a general power source (100V source) provided outside the vehicle, such as a household wall socket. The in-vehicle devices operating a high-voltage source include the main battery of the vehicle, which itself is a high-voltage source.

This embodiment exemplifies a remote control system for in-vehicle devices and an in-vehicle device controller included in the remote control system. The present invention also includes an in-vehicle device controller included in an operating system that is not remotely controlled, such as a system that directly controls the devices installed in the vehicle.

### [Overall System Configuration]

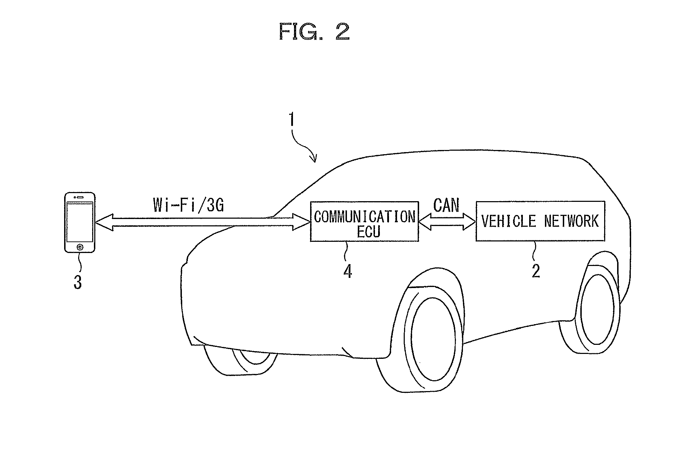

Fig. 2 is a schematic view of a remote control system for in-vehicle devices according to this embodiment. As illustrated in Fig. 2, the remote control system includes a vehicle network 2, a multifunctional portable terminal (smartphone) 3, and a communication ECU (also referred to as "wireless communication device" or "EV remote ECU") 4. The vehicle network 2 is installed in a vehicle 1 and includes various controllers (in-vehicle-device controllers) that control in-vehicle devices. The smartphone 3 or a mobile communication device is used to remotely control the in-vehicle devices. The communication ECU 4 is installed in the vehicle 1, intervenes between the controllers of the vehicle network 2 and the smartphone 3, and functions as a wireless router for wireless communication.

The communication between the communication ECU 4 and the vehicle network 2 is established via a wired controller area network (CAN), while the communication between the communication ECU 4 and the smartphone 3 is established via wireless communication such as wireless fidelity (Wi-Fi) (trademark) or 3rd generation (3G) scheme. In this embodiment, the Wi-Fi scheme is used for the communication between the communication ECU 4 and the smartphone 3.
The CAN is widely used as the vehicle network 2 because of its high tolerance to noise and the independence of communication lines that allows communication via the remaining lines even after a disconnection of one of the lines. The CAN is also used for communication between the communication ECU 4 and the vehicle network 2.

The Wi-Fi scheme is used for the communication between the communication ECU 4 and the smartphone 3 because the Wi-Fi scheme is supported by many commercially available smartphones and other mobile communication devices, has a relatively high communication rate, has a relatively large wireless communication distance (maximum sight distance for communication with the vehicle is approximately 200 m), and has a low running cost due to its high versatility that does not require a communication infrastructure.

In this embodiment, a mobile communication device by the Wi-Fi scheme is exemplified by a smartphone. Alternatively, any other mobile communication device may be used that can support the Wi-Fi communication (Wi-Fi devices) and download application programs (hereinafter, also referred to as "application software") for the remote control system.

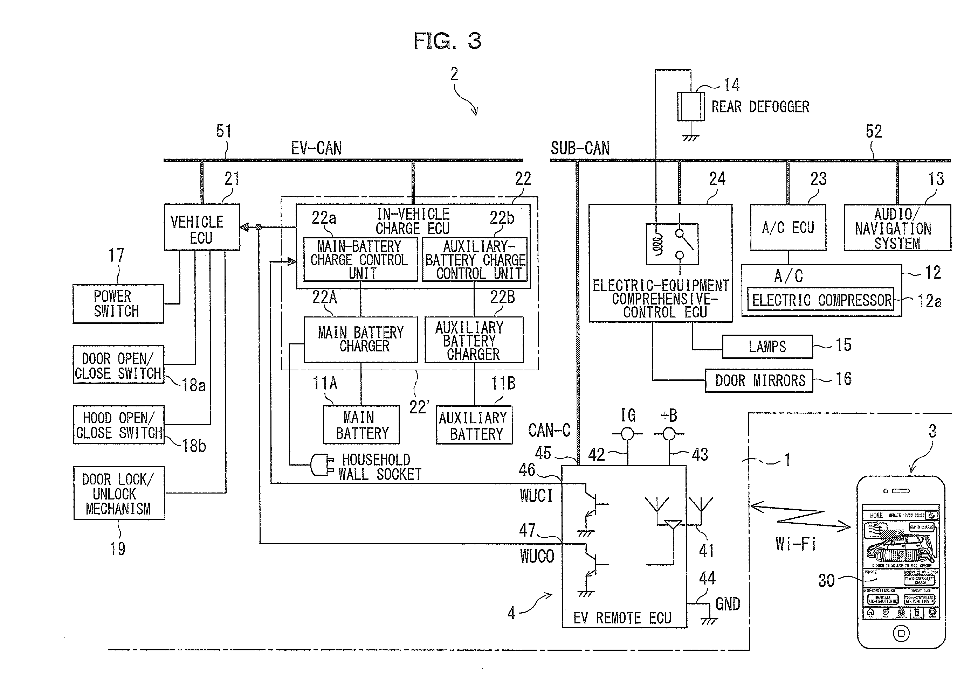

Fig. 3 illustrates the detailed configuration of the remote control system. As illustrated in Fig. 3, the vehicle is equipped with in-vehicle devices, such as a main battery charger 22A that charges a main battery (a battery for running) 11A, an auxiliary battery charger 22B that charges an auxiliary battery 11B, an air-conditioner 12, an audio/navigation system 13, a rear defogger 14, and various electric components including lamps 15, door mirrors 16, and wind-shield wipers (not shown). The air-conditioner 12 includes an electric compressor 12a. The electric compressor 12a receives power from the main battery 11A, which is a high-voltage source.

The vehicle is also equipped with in-vehicle-device controllers that control the in-vehicle devices, such as a vehicle ECU 21, an in-vehicle charge ECU (charger) 22, an air-conditioning controller or air-conditioning ECU 23, and a comprehensive-electrical-equipment control ECU 24. The vehicle ECU 21 controls the vehicle comprehensively. The in-vehicle charge ECU 22 includes a main-battery charge control unit (main-battery charge controller) 22a that controls the charges of the main battery 11A and an auxiliary-battery charge control unit (auxiliary-battery charge controller) 22b that controls the charge of the auxiliary battery 11B. The air-conditioning ECU 23 controls the air-conditioner 12. The comprehensive-electrical-equipment control ECU 24 controls the operation of the electric components, such as the rear defogger 14, the lamps 15, and the door mirrors 16.

The in-vehicle-device controllers or the ECUs 21 to 24, the smartphone 3, and the communication ECU 4 each include an input/output device, a storage device (memory such as an ROM, an RAM, and/or non-volatile RAM), a central processing unit (CPU), and a timer/counter.
The vehicle ECU 21 and the in-vehicle charge ECU 22 are connected via an electric vehicle CAN (EV-CAN) 51, while the air-conditioning ECU 23, the comprehensive electrical-equipment control ECU 24, and the audio/navigation system 13 are connected via an electrical-equipment CAN (SUB-CAN) 52. The EV-CAN 51 and the SUB-CAN 52 are connected via a gateway (not shown).

The vehicle ECU 21 includes a power-switch control unit that operates a power-switch driving mechanism of a power switch 17 of the vehicle and turns on/off the power switch 17, and a door lock/unlock control unit that operates lock/unlock mechanisms 19 of the doors to lock/unlock the doors. The vehicle ECU 21 receives information on the on/off state of the power switch 17, the lock/unlock state of the lock/unlock mechanism 19, and the on/off state (open/close state) of a door open/close switch (door open/close sensor) 18a or an open/close sensor that detects opening of each door which is an openable member of the vehicle, and an engine-hood open/close switch (hood open/close sensor 18b) or an open/close sensor that detects opening of the engine hood which is another openable member of the vehicle.

Although only one door open/close sensor 18a is illustrated, multiple door open/close sensors 18a are actually provided for the respective doors for the detection of the opening/closing of each door.
The information detected by the open/close sensors 18a and 18b is sent to the in-vehicle charge ECU 22 via the EV-CAN 51 and is used for charge control by the main-battery charge control unit 22a and the auxiliary-battery charge control unit 22b. The information detected by a height sensor 60 is sent to the air-conditioning ECU 23 via the EV-CAN 51 and the SUB-CAN 52 for the control of the operation of the air-conditioner 12 by the air-conditioning ECU 23. Such control operations will be described below.

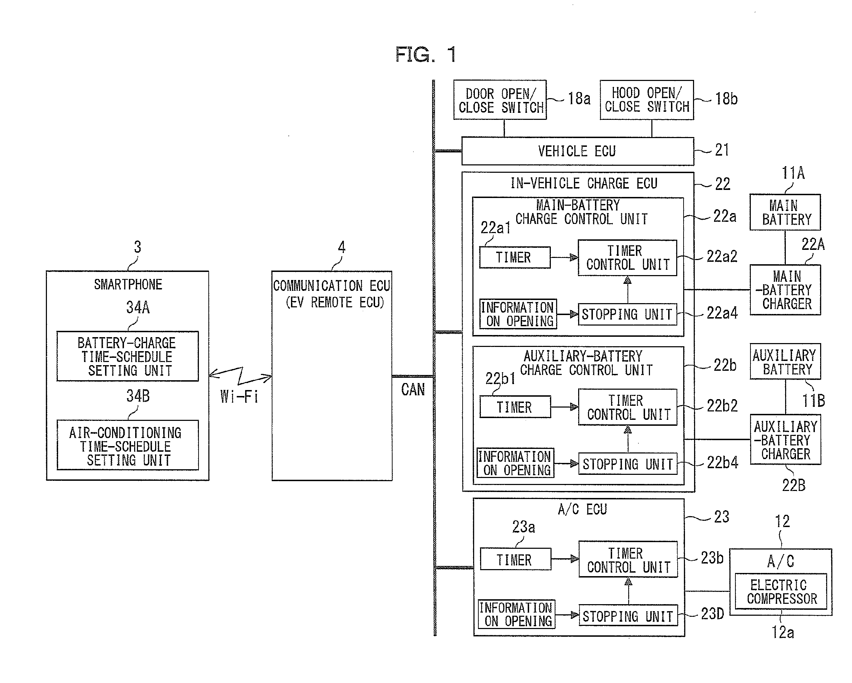

The charge of the main battery 11A and the charge of the auxiliary battery 11B by the main-battery charge control unit 22a and the auxiliary-battery charge control unit 22b of the in-vehicle charge ECU 22 will be explained with reference to Fig. 1.
As illustrated in Fig. 1, the main battery charger 22A charges the main battery 11A by supplying the main battery 11A with electric power from an external power source. In particular, the main battery charger 22A can charge the battery 11A via a dedicated charge socket installed in a charge station or a general power source, such as a household wall socket. The main-battery charge control unit 22a controls the charge by the main battery charger 22A.

Three charge modes for the main battery 11A under the control of the main-battery charge control unit 22a are provided: "rapid charge" using a dedicated external rapid charger; "200V normal charge" using a dedicated 200V external charger; and "100V normal charge" using a 100V general power source, such as a household wall socket.
The main-battery charge control unit 22a includes a main-battery-charge timer control unit 22a2 that controls the charge of the main battery 11A by charge operation at real-time, sets a timer 22a1 in advance in accordance with a charge schedule, and automatically charges the main battery 11A in accordance with the charge schedule.

The auxiliary battery charger 22B charges the auxiliary battery 11B by supplying the auxiliary battery 11B with electric power from the main battery 11A. The charge by the auxiliary battery charger 22B is controlled by the auxiliary-battery charge control unit 22b.
The auxiliary-battery charge control unit 22b includes an auxiliary-battery-charge timer control unit 22b2 that controls the charge of the auxiliary battery 11B at real-time, sets a timer 22b1 in advance in accordance with a charge schedule, and automatically charges the auxiliary battery 11B in accordance with the charge schedule.

The automatic charge in accordance with a schedule set by a timer is referred to as "timer-controlled charge." Timer-controlled charge of the main battery 11A is performed in the "100V normal charge" mode.
The operation control of the air-conditioner 12 by the air-conditioning ECU 23 will now be described.
The air-conditioner 12 carries out air-conditioning (cooling/heating) of the interior of the vehicle and blasts air onto the front windshield.
The air-conditioning ECU 23 includes an air-conditioning timer control unit 23b that controls the operation of the air-conditioner 12 at real time in accordance with the operation of the operating device in the vehicle (the interior of the vehicle), sets an air-conditioning schedule with a timer 23a in advance, and automatically carries out air-conditioning of the interior and blasting of air onto the front windshield in accordance with a time schedule.

Automatic air-conditioning in accordance with a schedule set by a timer is referred to as "timer-controlled air-conditioning."
The air-conditioning modes include "air-conditioning (cooling) standby," "air-conditioning (cooling)," "air-conditioning (heating) standby," "air-conditioning (heating)," "air-conditioning(front windshield blast) standby," and "air-conditioning (front windshield blast)" modes. In each air-conditioning standby mode, the air-conditioning is scheduled but is not yet carried out.

The comprehensive electric-equipment control ECU 24 controls the operation of the electric components, such as the rear defogger 14, the lamps 15 including head lights and position lamps, the door mirrors 16, and windshield wipers, and detects the operating state of these electric components.
The communication ECU 4 includes a transmission/reception antenna 41, an IG terminal 42, a +B terminal 43, a ground terminal 44, a CAN connection terminal 45, a charge-standby-signal output unit 46, and a system-start-signal output unit 47. The IG terminal 42 connects to an ignition power source when the key switch is in the position of ON or START. The +B terminal 43 is in constant connection with the battery power source. The ground terminal 44 is grounded. The CAN connection terminal 45 is connected to a high-speed CAN (CAN-C). The charge-standby-signal output unit 46 outputs a signal WUCI for temporarily holding the charge functions. The system-start-up-signal output unit 47 outputs a WakeUp signal WUCO for starting the system of the electric vehicle.

### [Display Menu of Smartphone (Mobile Communication Device)]

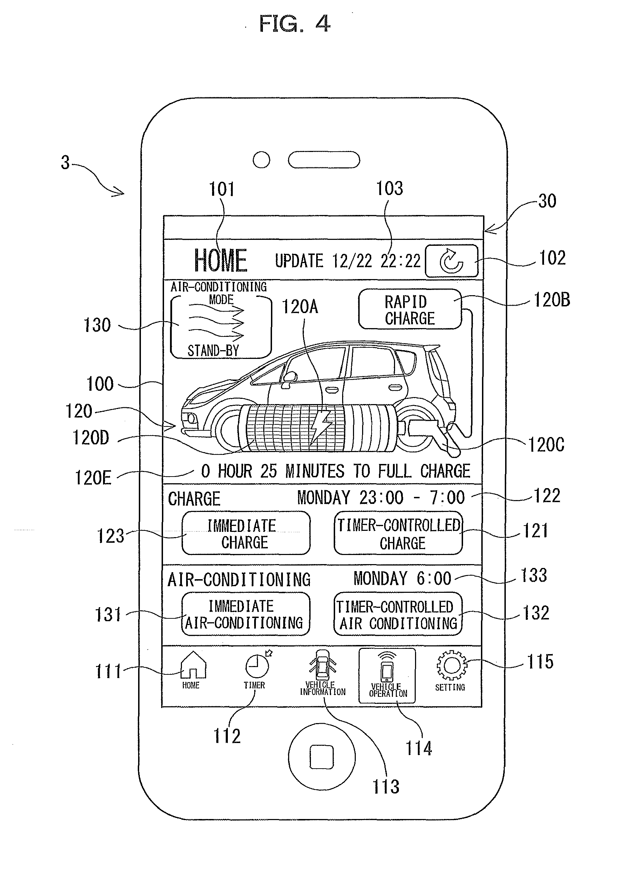

Application software of the remote control system is downloaded to the smartphone 3 and launched to display an image such as that illustrated in Fig. 4 on the screen of the touch panel display 30 of the smartphone 3.
As in Fig. 4, a home menu 100 is displayed upon start-up. The top edge region of the home menu 100 displays a menu title (home) 101, an update button (switch button) 102, and the time and date 103 of the update. The bottom edge region of the home menu 100 displays a mode selection buttons (switch buttons) consisting of a home button 111, a timer button 112, a vehicle information button 113, a vehicle operation button 114, and a setting button 115. The home menu 100 illustrated in Fig. 4 is displayed upon start-up or upon operation of the home button 111.

The remaining center area of the home menu 100 other than the top edge and the bottom edge regions displays a charge indicator 120, an air-condition indicator 130, and an immediate charge button 123 in the upper part. The lower part displays a timer-controlled charge button 121, a timer-controlled charge setting 122, an immediate air-conditioning button (rapid air-conditioning button) 131, a timer-controlled air-conditioning button 132, and a timer-controlled air-conditioning setting 133.

If the main battery 11A is being charged, the charge indicator 120 displays a charging mark 120A and the current charge mode 120B, which is selected from one of the "rapid charge," "200V normal charge," and "100V normal charge." The connection 120C of a charge plug and a charge gun is also indicated. While the battery is being charged, the connection 120C of the charge plug is "connected." While a charge schedule is being set by the timer in advance, the connection 120C of the charge plug is being "connected", and the battery is being uncharged, "charge standby" is displayed as the charge mode 120B. The charge indicator 120 includes a schematic graph 120D representing the state of charge and the time 120E required for full charge.

The timer-controlled charge button 121 is operated to turn on/off the timer-controlled charge. Each time the timer-controlled charge button 121 is touched, it alternates between an ON state and an OFF state. The on/off state of the button may be distinguished by turning on/off (or increasing/decreasing the brightness of) a light or by changing the color of the button.
The immediate air-conditioning button 131 is operated to turn on/off rapid air-conditioning (immediate air-conditioning). Each time the rapid air-conditioning button 131 is operated, it alternates between an ON state and an OFF state. The on/off state of the button may be distinguished by turning on/off (or increasing/decreasing the brightness of) a light or by changing the color of the button.

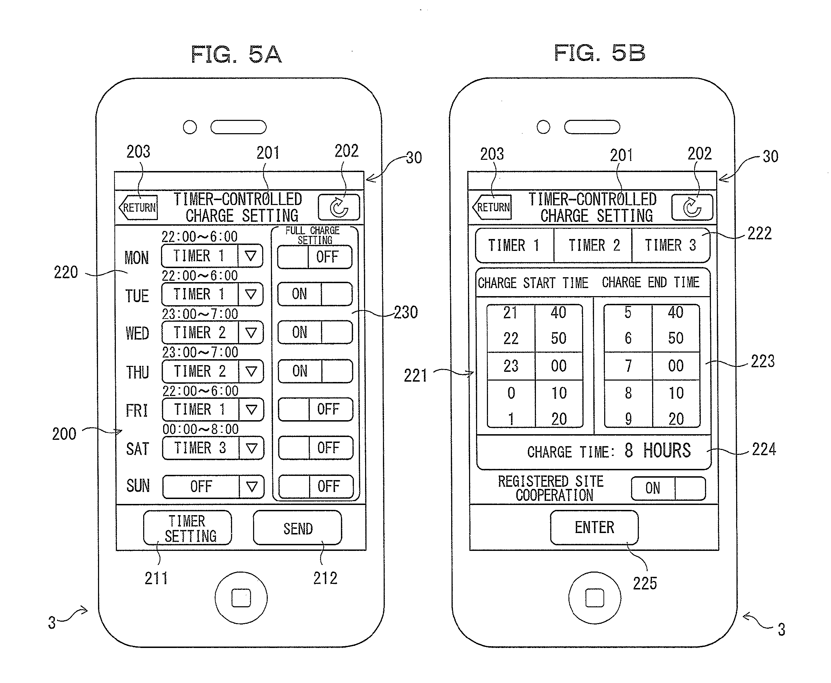

The timer-controlled air-conditioning button 132 turns on/off the timer-controlled air conditioning. Each time the timer-controlled air-conditioning button 132 is touched, the air-conditioning mode alternates between an ON state and an OFF state. The ON/OFF state of the button may be distinguished by turning on/off (or increasing/decreasing the brightness of) a light or changing the color of the button.
Turning on the timer-controlled charge button 121 and then touching the timer button 112 display a timer-controlled charge setting menu 200, as illustrated in Fig. 5A. The top edge region of the timer-controlled charge setting menu 200 displays a menu title (timer-controlled charge setting) 201, an update button (switch button) 202, and a return button (switch button) 203. The bottom edge region displays a timer setting button 211 and a send button 212.

The left halt of the remaining center area of the timer-controlled charge setting menu 200 other than the top edge and the bottom edge regions displays a charge schedule 220 set for every day of the week. The right half of the area displays selection switch buttons 230 for turning on/off full charge. The charge schedule 220 can be set to OFF (timer-controlled charge turned off) or to one of the schedules set in advance (here there are three schedules set in advance referred to as "Timer 1," "Timer 2," and "Timer 3").

The settings for Timers 1, 2, and 3 can be changed by the selection of the day of the week and a touch of the timer setting button 211 to display a timer setting menu 221, as illustrated in Fig. 5B. The timer setting menu 221 includes selection switch buttons 222 corresponding to Timers 1, 2, and 3 and a scroll menu 223 for selecting the start time (hour and minute) and the end time (hour and minute) of the charge. One of Timers 1, 2, and 3 is selected, and the scroll menu is operated to set the start time or the end time of the charge. The charge time 224 is determined on the basis of the time set on the scroll menu 223 and is displayed below the scroll menu 223.

The bottom edge region of the timer setting menu 221 displays an enter button 225, which is touched to return to the timer-controlled charge setting menu 200 illustrated in Fig. 5A. Then, the send button 212 is touched to send the charge schedule setting information to the communication ECU 4 of the vehicle. The charge schedule setting information is sent from the communication ECU 4 to the in-vehicle charger ECU 22 and stored in the memory of the in-vehicle charger ECU 22. The in-vehicle charger ECU 22 charges the batteries in accordance with the charge schedule stored in the memory.

The immediate charge button 123 is a switch to start the charge of the main battery 11A or the auxiliary battery 11B at real time. The immediate charge button 123 is operated to display a selection menu (not shown). The selection of the charge of the main battery 11A or the charge of the auxiliary battery 11B is guided, and the start of the real-time charge of the selected battery is set on the menu. An enter button and a send button are displayed with the selection menu (not shown). Touching the enter button to decide the operation and then touching the send button basically start the charge of the battery 11A or 11B.

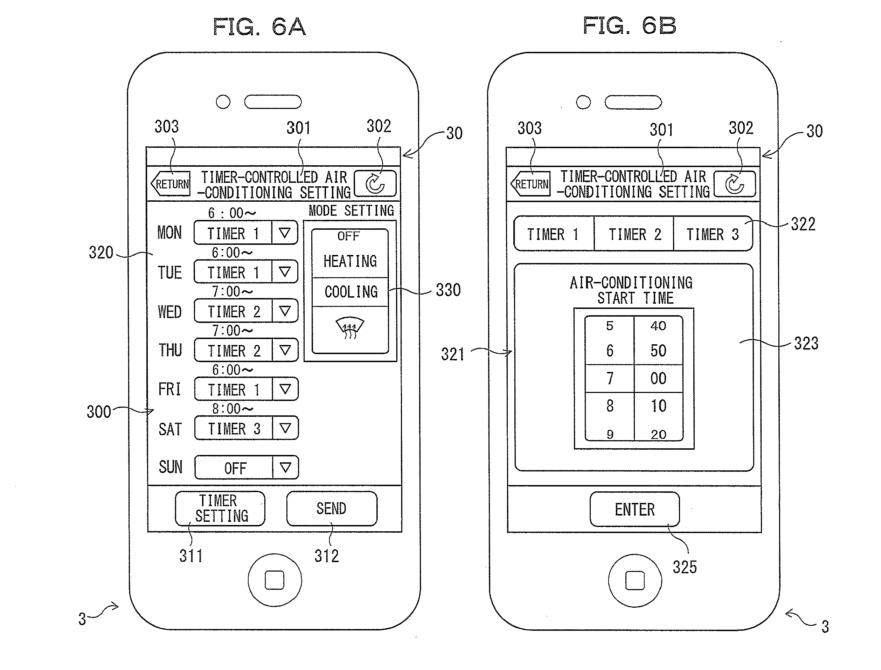

During charge of the battery 11A or 11B, the in-vehicle charge ECU 22 estimates the state of charge (remaining capacity) of the battery 11A or 11B and stops the charge when the battery 11A or 11B is estimated to be fully charged.
Similarly, turning on the timer-controlled air-conditioning button 132 and then touching the timer button 112 display a timer-controlled air-conditioning setting menu 300, as illustrated in Fig 6A. The top edge region of the timer-controlled air-conditioning setting menu 300 displays a menu title (timer-controlled air-conditioning setting) 301, an update button (switch button) 302, and a return button (switch button) 303. The bottom edge region displays a timer setting button 311 and a send button 312.

The left half of the remaining center area of the timer-controlled air-conditioning setting menu 300 other than the top edge and the bottom edge regions displays the air-conditioning schedule 320 set for every day of a week. The right half of the area displays the air-conditioning modes (heating, cooling, defogging, or OFF) 330. The air-conditioning schedule 320 can also be set to OFF (timer-controlled air-conditioning turned off) or to one of the schedules set in advance (here there are three schedules set in advance referred to as "Timer 1," "Timer 2," and "Timer 3").

Similar to the timer-controlled charge, the settings for Timers 1, 2, and 3 can be changed by the selection of the day of the week and a touch of the timer setting button 311 to display a timer setting menu 321, as illustrated in Fig. 6B. The timer setting menu 321 includes selection switch buttons 322 corresponding to Timers 1, 2, and 3 and a scroll menu 323 for selecting the start time (hour and minute) of the air-conditioning. One of Timers 1, 2, and 3 is selected, and the scroll menu is operated to set the start time of the air-conditioning.

The bottom edge region of the timer setting menu 321 displays an enter button 325, which is touched to return to the timer-controlled air-conditioning setting menu 300 illustrated in Fig. 6A. Then, the send button 312 is operated to send the air-conditioning schedule setting information to the communication ECU 4 of the vehicle. The air-conditioning schedule information is sent from the communication ECU 4 to the air-conditioning ECU 23 and stored in the memory of the air-conditioning ECU 23. The air-conditioning ECU 23 starts air-conditioning of the vehicle in accordance with the air-conditioning schedule stored in the memory.

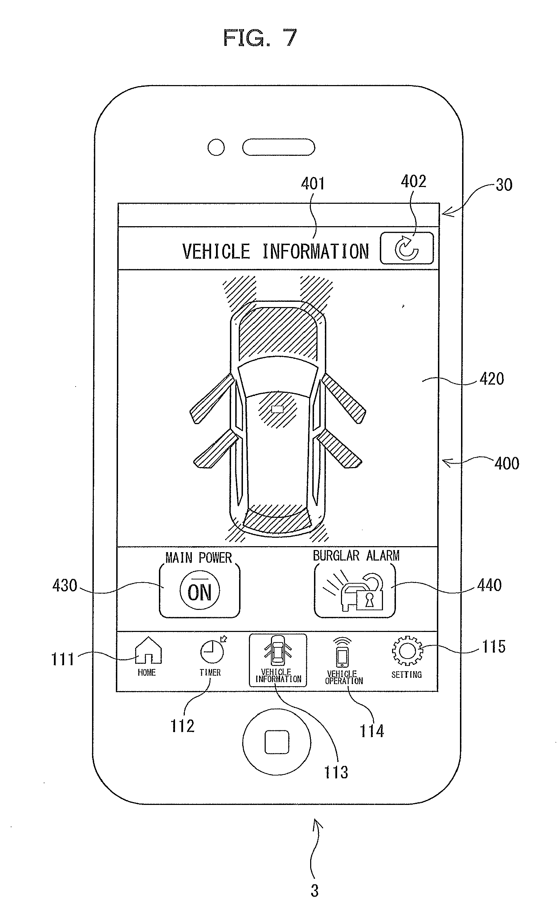

In the application software of the smartphone 3, the setting element associated with the timer-controlled charge is equivalent to a battery-charge time-schedule setting unit 34A, and the setting element associated with the timer-controlled air-conditioning is equivalent to an air-conditioning time-schedule setting unit 34B.
The vehicle information button 113 on the home menu 100 is touched to display a vehicle information menu 400 illustrated in Fig. 7. The top edge region of the vehicle information menu 400 displays a menu title (vehicle information) 401 and an update button (switch button) 402. Similar to the home menu 100, the bottom edge region displays various buttons (switch buttons), such as a home button 111, a timer button 112, a vehicle information button 113, a vehicle operation button 114, and a setting button 115.

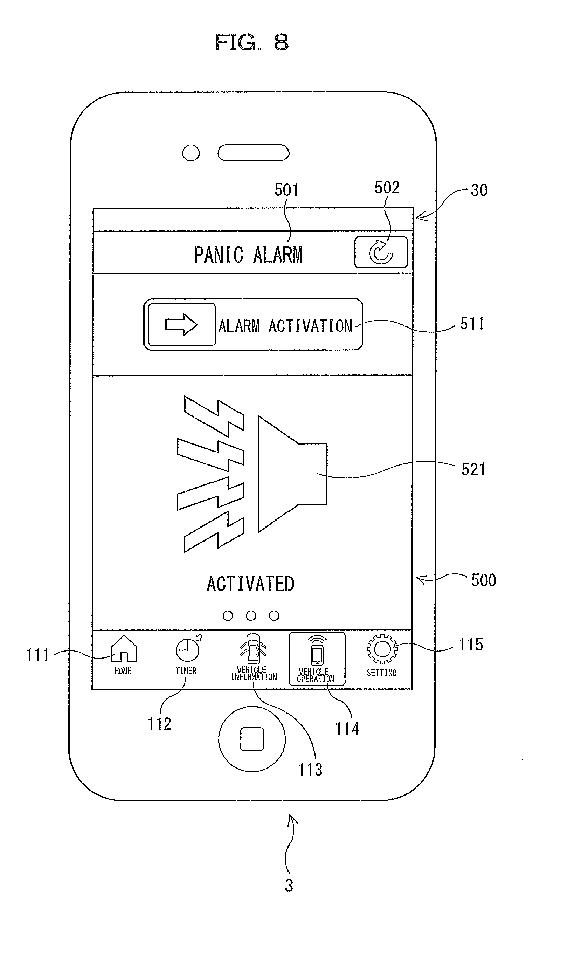

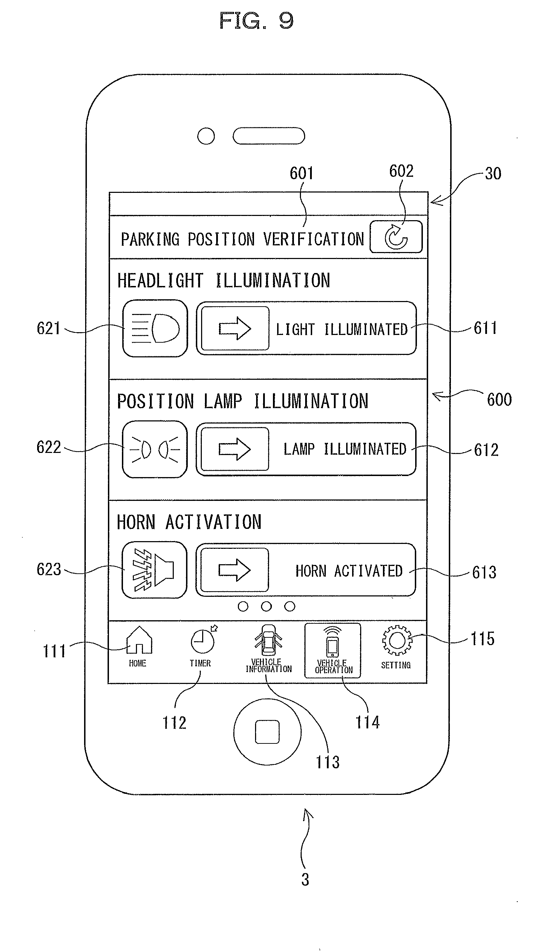

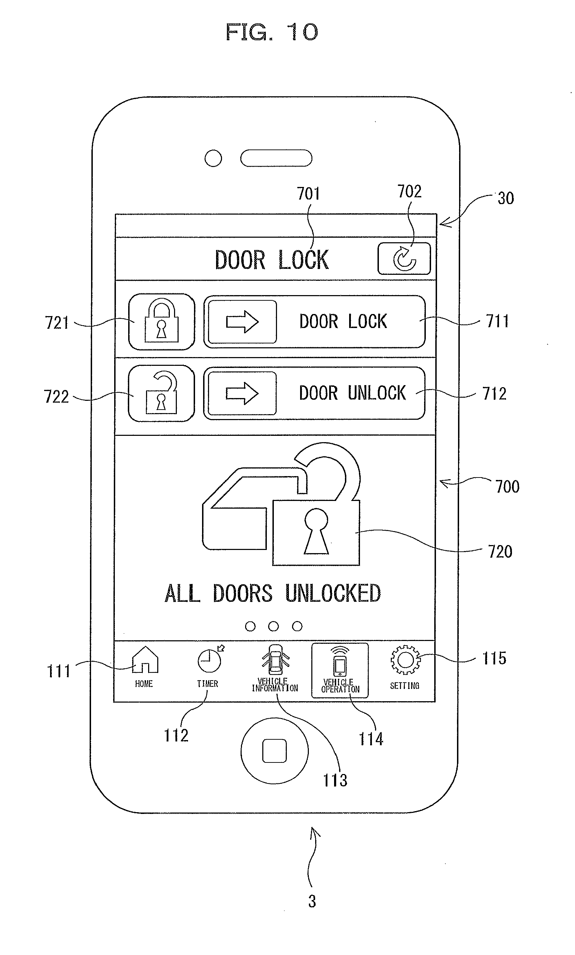

The remaining center area of the vehicle information menu 400 other than the top edge and the bottom edge regions displays an operating state 420 of the lamps and the doors in the upper half. A position (ON/OFF) 430 of the power switch (power source) and an operating state 440 of a burglar alarm are displayed in the lower half of the area.
The vehicle operation button 114 is touched to display a vehicle operation menu (panic alarm) 500 illustrated in Fig. 8, a vehicle operation menu (parking position verification) 600 illustrated in Fig. 9, or a vehicle operation menu (door lock) 700 illustrated in Fig. 10.

For example, the vehicle operation button 114 on the home menu 100 or the vehicle information menu 400 is touched to display the vehicle operation menu (panic alarm) 500 illustrated in Fig. 8. Then, the vehicle operation button 114 on the vehicle operation menu 500 is touched to display the vehicle operation menu (parking position verification) 600 illustrated in Fig. 9. Then, the vehicle operation button 114 on the vehicle operation menu 600 is operated to display the vehicle operation menu (door lock) 700 illustrated in Fig. 10.

The vehicle operation menus 500, 600, and 700 illustrated in Figs. 8, 9, and 10, respectively, display, menu titles (panic alarm, parking position verification, and door lock) 501, 601, and 701 and update buttons (switch buttons) 502, 602, and 702 at their top edge regions. Similar to the home menu 100, the bottom edge regions each display various buttons (switch buttons), such as a home button 111, a timer button 112, a vehicle information button 113, a vehicle operation button 114, and a setting button 115.

The remaining center areas of the vehicle operation menus 500, 600, and 700 other than the top edge and the bottom edge regions display slide switches and icons representing different states.
A panic-alarm slide switch 511 in the vehicle operation menu 500 is operated to turn on/off a panic alarm, which is used to sound a warning to the periphery of the vehicle. The ON/OFF state of the panic alarm is indicated by text, by turning on/off (or increasing/decreasing the brightness of) the icon 521, or by changing the color of the icon 521.

A headlight illumination slide switch 611 in the vehicle operation menu 600 of the parking position verification is operated to turn on/off headlights; a position-lamp illumination slide switch 612 is operated to turn on/off the position lamps; and a horn slide switch 613 is operated to activate/deactivate the horn. The ON/OFF state of the headlights, the ON/OFF state of the position lamps, and the activation/deactivation of the horn are indicated by text, by turning on/off (or increasing/decreasing the brightness of) the icons 621, 622, and 623, respectively, or by changing the colors of the icons 621, 622, and 623.

In the case of the vehicle operation menu 700 of the door lock, a door lock slide switch 711 is operated to lock the doors, and a door unlock slide switch 712 is operated to unlock the doors. The locked/unlocked state of the doors and the operating state of the burglar alarm (disabled, enabled, or operating) are indicated by the image, color, and text of icons 720, 721, and 722.

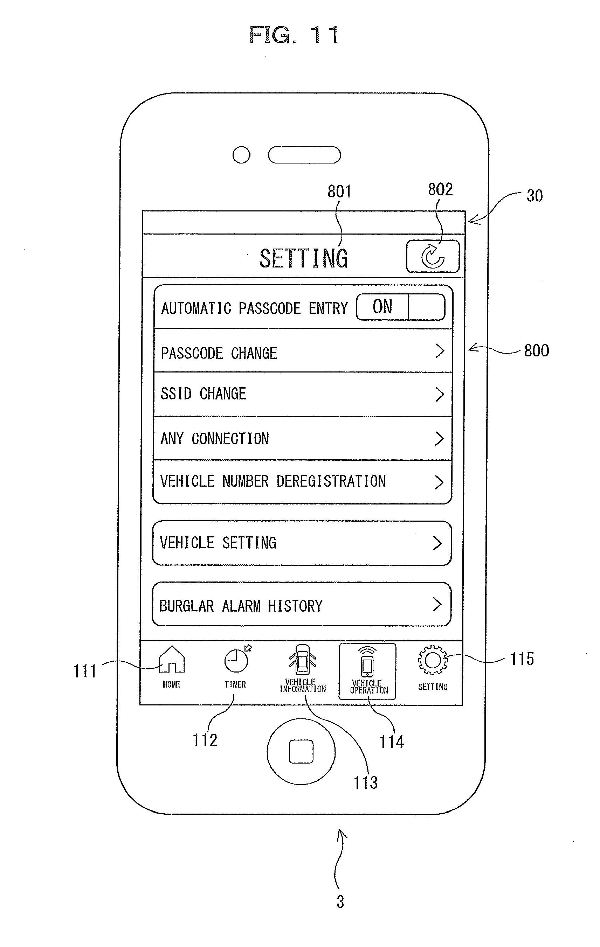

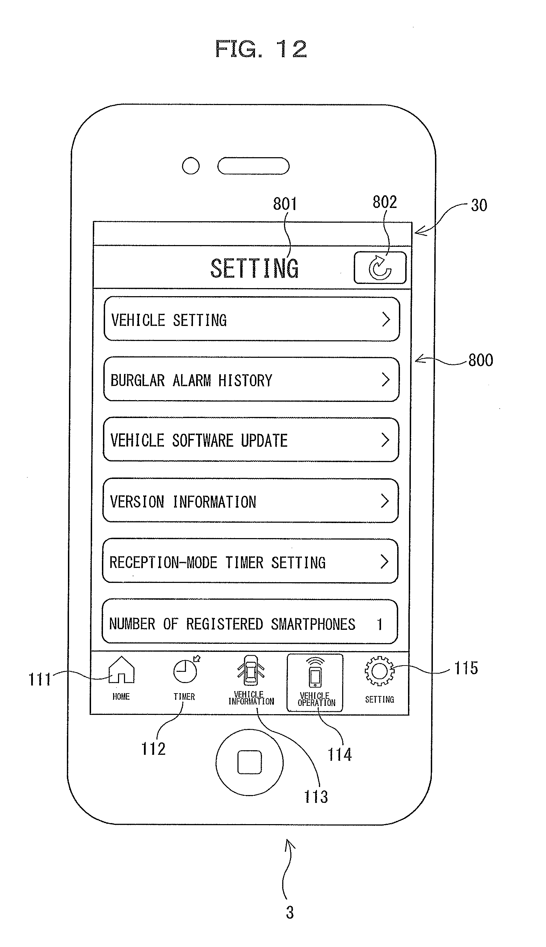

The setting button 115 is operated to display a setting menu 800 illustrated in Figs. 11 and 12. The setting items include, for example, automatic passcode entry, passcode change, SSID change, ANY connection, vehicle number deregistration, vehicle settings, history of burglar alarm activation, update of vehicle software. References include the version information and the number of registered smartphones. Fig. 12 illustrates the setting menu 800 scrolled down from that illustrated in Fig. 11.

For example, a unique Wi-Fi device such as the smartphone 3 to be used for the remote control of the vehicle must be registered to the communication ECU 4 of the vehicle. In such a case, the communication ECU 4 of the vehicle is put into registerable state, the vehicle setting item in the menu is touched to enter a vehicle setting mode, the Wi-Fi device is connected to the vehicle, and the Wi-Fi password input to the Wi-Fi device is sent to the communication ECU 4. In this way, the Wi-Fi device is registered to the communication ECU 4 of the vehicle, and communication is available by launching a smartphone application.

The software of the communication ECU 4 of the vehicle can be updated by the smartphone 3 via Wi-Fi communication by touching a vehicle software update button in the menu. If the update of the software of the vehicle is required for normal operation of the functions, a warning menu for the software update is displayed on the smartphone.

### [Avoidance Control of High-voltage Operation]

The charge and the air-conditioning carried out in this system require the operation (energization) of the main battery 11A, which is a high-voltage source. The operation of the high-voltage source is avoided during maintenance at, for example, a repair facility by operation stop control of the high-voltage source under certain conditions.

In this operation stop control, the openable members of the vehicle 1, such as the doors and the engine hood, are generally opened during maintenance. Thus, if the open/close sensors, such as the door open/close sensor 18a and/or the hood open/close sensor 18b, detect the opening of any openable member of the vehicle 1, the operation of the main battery 11A, which is a high-voltage source, is avoided on the presumption that maintenance is being carried out.
The main-battery charge control unit 22a of the in-vehicle charge ECU 22, which is an in-vehicle device controller of this system, includes a stopping unit 22a4 that disables the timer control of the charge of the main battery by the main-battery-charge timer control unit 22a2 upon reception of the information on the opening of any openable member from the open/close sensors 18a and/or 18b and stops the control or operation of the main battery charger 22A to stop the operation of the main battery 11A.

If the stopping unit 22a4 receives the information on the opening of any openable member from the open/close sensors 18a and/or 18b in a case where the charge of the main battery 11A is instructed to the main-battery charge control unit 22a at real time by the immediate charge button 123, the charge control at real time is disabled, and the control or operation of the main battery charger 22A is stopped to stop the operation of the main battery 11A.

The auxiliary-battery charge control unit 22b of the in-vehicle charge ECU 22 includes a stopping unit 22b4 that disables the timer control of the charge of the auxiliary battery by the auxiliary-battery-charge timer control unit 22b2 upon reception of the information on the opening of any openable member from the open/close sensors 18a and/or 18b and stops the control or operation of the auxiliary battery charger 22B to stop the operation of the main battery 11A.

If the stopping unit 22b4 receives the information on the opening of any openable member from the open/close sensors 18a and/or 18b in a case where the charge of the auxiliary battery 11B is instructed to the auxiliary-battery charge control unit 22b at real time by the immediate charge button 123, the charge control at real time is disabled and the control or operation of the auxiliary battery charger 22B is also stopped to stop the operation of the main battery 11A.

The air-conditioning ECU 23 includes a stopping unit 23D that disables the control by the air-conditioning timer control unit 23b upon reception of the information on the opening of any openable member from the open/close sensors 18a and/or 18b and stops the control or operation of the air-conditioner 12 to stop the operation of the main battery 11A.
If the stopping unit 23D receives the information on the opening of any openable member from the open/close sensors 18a and/or 18b in a case where the operation of the air-conditioner 12 is instructed to the air-conditioning ECU 23 at real time by the immediate air-conditioning button 131, the control of the air-conditioning at real time is disabled and the control or operation of the air-conditioner 12 is also stopped to stop the operation of the main battery 11A.

The stopping units 22a4, 22b4, and 23D are provided for the respective in-vehicle device controllers (the in-vehicle charge ECU 22 and the air-conditioning ECU 23). Alternatively, for example, a stopping unit may be provided for the vehicle ECU 21 for transmitting a stop command to the respective in-vehicle device controllers (the in-vehicle charge ECU 22 and the air-conditioning ECU 23) and disabling the control of the charge or the air-conditioning.

The control or the operation of the main battery charger 22A, the auxiliary battery charger 22B, and the air-conditioner 12 are stopped to stop the operation of the main battery 11A upon detection of the opening of any one of the doors and engine hood of the vehicle 1 by the open/close sensors 18a and/or 18b. Alternatively, the operation of the main battery 11A may be stopped when a specific openable member is opened.

For example, the main battery 11A may be disposed below the floor of the vehicle 1, and a maintenance hole (also referred to as "service hole" or "plug") may be formed in the floor of the vehicle 1 above the main battery 11A for maintenance of the main battery 11A. In such a case, the main battery 11A is accessed through the opening of the door closest to the maintenance hole. Thus, the control or the operation of the main battery charger 22A, the auxiliary battery charger 22B, and/or the air-conditioner 12 is stopped to stop the operation of the main battery 11A upon detection of the opening of the door closest to the maintenance hole by the open/close sensor 18a.

### [Operations and Advantages]

The in-vehicle device controller according to an embodiment of the present invention and the remote control system for in-vehicle devices including the in-vehicle device controller have the configuration described above and achieve the following operations and advantages.

The charge and the air-conditioning require the operation (energization) of the main battery 11A, which is a high-voltage source. During maintenance of the vehicle 1 at a repair facility, the openable members of the vehicle 1, such as the doors and engine hood, are opened. Upon reception of the information on the opening of the openable members sent from the open/close sensors 18a and 18b, the stopping units 22a4, 22b4, and 23D stop the control of the charge and the air-conditioning to avoid the operation of the high-voltage source.

Thus, even if the operator who is to perform the maintenance with any openable member of the vehicle open forgets to perform pre-maintenance procedures, such as disconnecting the auxiliary battery, or starts the maintenance without confirming the insertion of the charge gun into the charge plug, and the high-voltage source is operated in response to an improper operation of the operating device or the operation of the timer-controlled charge and/or the timer-controlled air-conditioning, such operation of the high-voltage source is avoided by the stopping units 22a4, 22b4, and 23D. Thus, the risk of the operation of the high-voltage source near the operator is avoided.

Particularly, the charge gun is not inserted into the charge plug when the auxiliary battery 11B is charged by the main battery 11A and when the preliminary air-conditioning is carried out with the main battery 11A. Therefore, the operator cannot control the charge of the auxiliary battery 11B and the preliminary air-conditioning. Unexpected operation of the high-voltage source is avoided by a control logic without bearing a load on the operator.

The openable members, such as the doors, the engine hood, and the trunk lid, are opened at times other than maintenance as well. It is effective in securing safety at times other than maintenance to stop the operation of the high-voltage source by stopping the control or the operation of the in-vehicle devices that operate the main battery 11A, such as the main battery charger 22A, the auxiliary battery charger 22B, and the air-conditioner 12 when any openable member is opened.

The main battery 11A may be disposed below the floor of the vehicle 1, and the maintenance hole may be formed in the floor of the vehicle 1 above the main battery 11A for maintenance of the main battery 11A. In such a case, the control or the operation of the main battery charger 22A, the auxiliary battery charger 22B, and/or the air-conditioner 12 is stopped to stop the operation of the main battery 11A upon detection of the opening of the door closest to the maintenance hole by the open/close sensor 18a. In this way, the operation of the high-voltage source can be stopped during times in which the maintenance is more likely to be performed.

This system has the following advantages.
In this system, the charge of the main battery 11A and auxiliary battery 11B and the operation of the air-conditioner 12 can be carried out by remote control via a mobile communication device or smartphone 3 which serves as an operating device. The remote control via the smartphone 3 can be carried out far away from the maintenance facility where the maintenance of the vehicle is performed. This enhances convenience but also increases the possibility of improper operations at a site that cannot be controlled by the maintenance operator. The operation of the high-voltage source, however, is avoided during maintenance of the vehicle, as described above, and the negative effect of the improper operations and the timer setting can be avoided.

A Wi-Fi scheme is used for the communication for remote control. The Wi-Fi scheme is advantageous in that the in-vehicle devices can be operated in a relatively far distance. In contrast, the Wi-Fi scheme may be disadvantageous in that improper operations of the smartphone 3 may have a far-reaching effect. The Wi-Fi scheme also is advantageous in that the in-vehicle devices can be readily controlled via the smartphone 3. In contrast, the Wi-Fi scheme is disadvantageous in that such ready control can lead to an improper operation of a mobile communication device.
In this system, however, the operation of the high-voltage source is avoided during maintenance of the vehicle as described above. Thus, the negative effects of the improper operations can be avoided.

In this system, by using wide-spread smartphones 3, various in-vehicle devices installed in the vehicle can be operated, monitored, and/or controlled at a point away from the vehicle by remote control. For example, the charge of the main battery 11A and the auxiliary battery 11B can be started or stopped by remote control. The start/stop of the charge can be carried out in accordance with a predetermined schedule. Thus, the charge can be readily controlled in the vehicle used at a regular timing.

The charged state of the main battery 11A appears on the display 30 of the smartphone 3 on the basis of the information sent from the in-vehicle charger ECU 22. Thus, especially, the charged state (state of charge) of the main battery 11A which is preferably grasped can be readily confirmed.
The air-conditioner 12 can be started by remote control through the smartphone 3 at a point away from the vehicle. Thus, the interior of the vehicle can be comfortably air-conditioned before an operator enters the vehicle. The air-conditioner 12 can be started in accordance with a start-up timing on a schedule set in advance. Thus, the operation of the air-conditioner 12 can be readily controlled in the vehicle that is used regularly.

The operating state of the air-conditioner 12 in accordance with an operation signal can be displayed on the display 30 of the smartphone 3. Thus, the state of the air-conditioning of the vehicle can be readily confirmed.
The communication between the smartphone 3 and the communication ECU 4 of the vehicle is established via the Wi-Fi scheme. The Wi-Fi communication has a relatively high communication rate, has a relatively large wireless communication distance, and has a low running cost due to its high versatility that does not require a communication infrastructure. Thus, a Wi-Fi device, such as the smartphone 3, can be comfortably used for remote control of in-vehicle devices at a suppressed cost, at a stress-free rate, and over a relatively long wireless communication distance (for example, approximately 200 m). Also, the running cost can be suppressed low.

### [Others]

The present invention should not be limited to the embodiments described above and the embodiments may be appropriately modified within the scope of the invention.
For example, in the embodiments described above, the charge of the main battery 11A, which is part of the high-voltage system, is not performed when any openable member of the vehicle 1, such as the doors or engine hood, is opened. The charge of the main battery 11A requires the insertion of the charge gun into the charge plug, allowing the operator to control such charge. Thus, the control logic for prohibiting the charge of the main battery 11A may be excluded. The operator, however, might start the operation without confirming the insertion of the charge gun into the charge plug when the charging the main battery 11A. Such a case can be handled by employing the embodiments.

The in-vehicle device for operating the high-voltage source in a vehicle is exemplified by the auxiliary battery 11B and the air-conditioner 12. In the present invention, the in-vehicle device covers those that operate a high-voltage source in a vehicle, and is not limited to the auxiliary battery 11B or air-conditioner 12.
In the embodiments described above, a mobile communication device is exemplified by a multifunctional mobile phone or the so-called smartphone. The mobile communication device is not limited to a multifunctional mobile phone.

For example, a tablet terminal (tablet PC), which is widely used today, may as well be employed as the mobile communication device supporting the Wi-Fi scheme.
In the embodiments described above, the Wi-Fi scheme is employed as a wireless LAN scheme. The usable communication standard is not limited to those described above, and any other wireless LAN scheme or a wireless scheme may be employed. The communication standard is preferred to have a relatively high communication rate, a relatively large wireless communication distance, and a low running cost due to its high versatility that does not require a communication infrastructure, such as the Wi-Fi scheme.

A Communication standard having such characteristics, such as the Wi-Fi scheme, may enhance the standby current of the wireless communication device installed in the vehicle. In such a case, it is effective to suppress the battery consumption in the vehicle by a reception standby mode only during a predetermined time period as in the present invention. The setting of each timer may be carried out without a mobile communication device but with an in-vehicle operating device that is not remotely controlled.

### [Industrial Applicability]

The in-vehicle device controller according to the present invention can be widely employed in an apparatus that controls or operates in-vehicle devices that operate high-voltage sources in automobiles by setting timers and remote control.

## Claims

1. An in-vehicle device controller controlling an in-vehicle device (11A, 11B, 12, 13, 14, 15, 16, 22A, 22B) for operating a high-voltage source (11A) installed in a vehicle (1), the in-vehicle device controller comprising:
stopping means (22a4, 22b4, 23D) stopping control or operation of the in-vehicle device (11A, 11B, 12, 13, 14, 15, 16, 22A, 22B) to stop the operation of the high-voltage source (11A) upon detection of opening of an openable member of the vehicle by an open/close sensor (18a, 18b).

2. The in-vehicle device controller according to Claim 1, wherein
the openable member is one of a plurality of openable members including a door, a hood, and a trunk lid of the vehicle, and
the stopping means (22a4, 22b4, 23D) stops control or operation of the in-vehicle device (11A, 11B, 12, 13, 14, 15, 16, 22A, 22B) to stop the operation of the high-voltage source (11A) upon detection of the opening of the door, the hood, or the trunk lid by the open/close sensor (18a, 18b).

3. The in-vehicle device controller according to Claim 2, wherein
the high-voltage source (11A) is disposed below a floor of the vehicle (1),
a maintenance hole for maintenance of the high-voltage source (11A) is disposed in the floor of the vehicle (1) above the high-voltage source (11A), and
the stopping means (22a4, 22b4, 23D) stops control or operation of the in-vehicle device (11A, 11B, 12, 13, 14, 15, 16, 22A, 22B) to stop the operation of the high-voltage source (11A) upon detection of the opening of a specific openable member among the plurality of the openable members by the open/close sensor (18a), the specific openable member providing access to the maintenance hole.

4. The in-vehicle device controller according to one of Claims 1 to 3, wherein
the in-vehicle device comprises a main battery charger supplying a main battery (11A) with electric power from an external power source, the main battery comprising the high-voltage source,
the in-vehicle device controller comprises a main-battery charge controller (22a) controlling the charge of the main battery through operation of the main battery charger with the main battery being connected to the external power source,
the main-battery charge controller (22a) comprises main-battery-charge timer control means (22a2, 22b2) automatically charging the main battery (11A) with the external power source in accordance with a time schedule established in advance, and
the stopping means (22a4, 22b4) disables control by the main-battery-charge timer control means (22a2, 22b2) upon detection of the opening of the openable member by the open/close sensor (18a, 18b) and stops control or operation of the main-battery charge controller (22a) to stop the operation of the high-voltage source (11A).

5. The in-vehicle device controller according to one of Claims 1 to 4, wherein
the in-vehicle device comprises an air-conditioner (12) installed in the vehicle, the in-vehicle device controller comprises an air-conditioning controller (23) controlling operation of the air-conditioner (12),
the air-conditioning controller (23) comprises air-conditioning timer control means (23b) automatically operating the air-conditioner (12) in accordance with a time schedule established in advance, and
the stopping means (23D) disables control by the air-conditioning timer control means (23b) upon detection of the opening of the openable member by the open/close sensor (18a, 18b) and stops control or operation of the air-conditioner (12) to stop the operation of the high-voltage source (11A).

6. The in-vehicle device controller according to one of Claims 1 to 5, wherein
the in-vehicle device comprises an auxiliary battery charger (22B) charging an auxiliary battery (11B) installed in the vehicle (1) with the main battery (11A),
the in-vehicle device controller comprises an auxiliary-battery charge controller (22b) controlling charge in which the auxiliary battery (11B) is supplied with electric power from the main battery (11A) by operation of the auxiliary battery charger (22B),
the auxiliary-battery charge controller (22b) comprises auxiliary-battery-charge timer control means (22b2) automatically performing the charge in accordance with a time schedule established in advance, and
the stopping means (22b4) disables control by the auxiliary-battery-charge timer control means (22b2) upon detection of the opening of the openable member by the open/close sensor (18a, 18b) and stops control or operation of the auxiliary battery charger (22B) to stop the operation of the high-voltage source (11A).
